# EUROPÄISCHE PATENTSCHRIFT

(11) **EP 1 507 104 B1**
(45) Veröffentlichungstag und Bekanntmachung des Hinweises auf die Patenterteilung: **12.10.2011**
(21) Anmeldenummer: 04018430.1
(22) Anmeldetag: 04.08.2004
(51) Int. Cl.: F16H 61/32, F16H 19/00

(54) **Stellgetriebe zur Erzeugung einer translatorischen Stellbewegung**
Adjusting mechanism for generating a translation movement
Mécanisme de commande pour génération d'un mouvement de translation

(30) Priorität: 11.08.2003 DE 10336714
(43) Veröffentlichungstag der Anmeldung: 16.02.2005
(73) Patentinhaber: Schaeffler Technologies GmbH & Co. KG, 91074 Herzogenaurach (DE)
(72) Erfinder: Braun, Roland, 77728 Oppenau (DE); Esly, Norbert, 77815 Bühl (DE); Kretz-Busch, Volker, 77833 Ottersweier (DE)

(56) Entgegenhaltungen:
- DE-U1- 8 814 598
- JP-A- 63 300 836

## Beschreibung

Die Erfindung betrifft ein Stellgetriebe zur Erzeugung einer translatorischen Stellbewegung, das eine Wählmechanik für ein Fahrzeuggetriebe bildet oder Bestandteil dieser ist.

In der JP 63-300836 A ist ein Stellantrieb gemäß dem Oberbegriff des Anspruches 1 mit zwei linear bewegbaren Keilen gezeigt, wobei jeder Keil über eine einzelne Antriebsvorrichtung (/Elektromotoren) angetrieben wird, und wobei eine Summation der Bewegungen der Keile erst über das Bauteil erfolgt. Es handelt sich also um ein klassisches Summationsgetriebe mit separaten Antriebseinheiten.

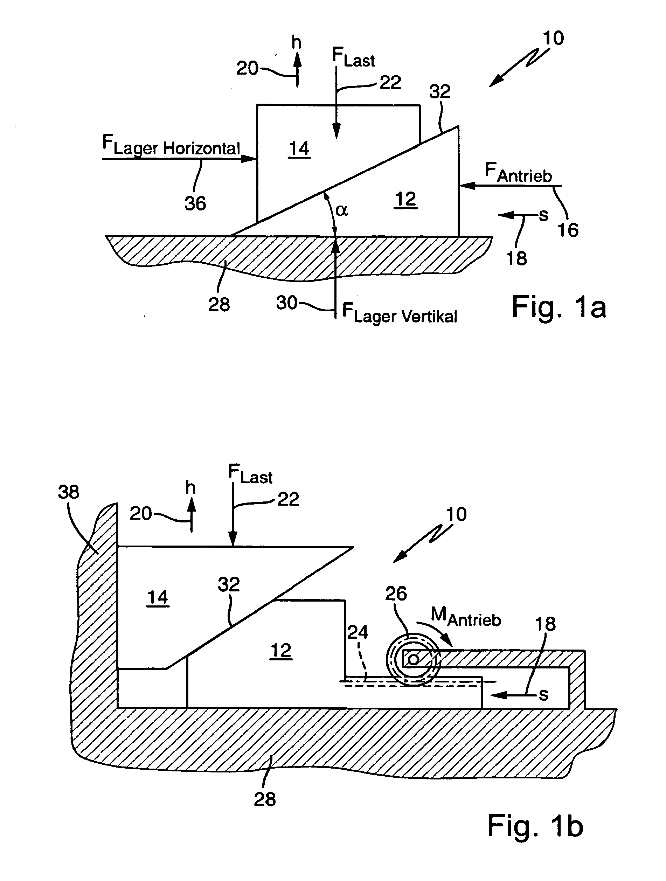

Ein der Anmelderin - gegebenenfalls allerdings nur intern - bekanntes Stellgetriebe 10 ist, mit gewissen Variationen, schematisch in den Fig. 1a sowie 1b schematisch dargestellt. Dieses Stellgetriebe weist ein treibendes Teil 12 sowie ein Ausgangsteil 14 auf. Mit diesem Stellgetriebe kann eine Antriebskraft F_{Antrieb}, die durch den Pfeil 16 schematisch dargestellt ist, bzw. ein Weg s, der durch den Pfeil 18 schmatisch dargestellt ist, übersetzt werden, und zwar in eine Abtriebskraft F_{Abtrieb,} die der durch den Pfeil 22 schematisch angedeuteten Kraft F_{Last} entgegengesetzt ist, bzw. einen Abtriebsweg h, der durch den Pfeil 20 schematisch dargestellt ist.

In der Gestaltung gemäß Fig. 1b ist das treibende Teil 12 mit einer Verzahnung 24 versehen, in welche ein Zahnrad 26 eingreift. Das Zahnrad 26 wird von einer nicht dargestellten Antriebseinrichtung belastet, so dass ein Antriebsmoment M_{Antrieb} zu diesem Zahnrad gegeben ist. Entsprechend wirkt auch in der Gestaltung Fig. 1b eine Antriebskraft auf das treibende Teil 12, die allerdings - im Gegensatz zu Fig. 1a - nicht dargestellt ist.

Die Antriebskraft ist in den Gestaltungen gemäß Fig. 1a und Fig. 1b im Wesentlichen senkrecht zur Abtriebskraft, und der Antriebsweg (s) 18 ist im Wesentlichen senkrecht zum Abtriebsweg 20.

In den Gestaltungen gemäß Fig. 1a und Fig. 1b ist ein Lager bzw. Führungselement 28 vorgesehen, welches eine vertikale Lagerkraft F_{Lager,vertikal}, die durch den Pfeil 30 schematisch dargestellt ist, auf das treibende Teil 12 aufbringt. Die Lagerkraft F_{Lager,vertikal} ist im Wesentlichen senkrecht zur Antriebskraft bzw. zum Antriebsweg.

Das treibende Teil 12, das das Ausgangsteil 14 in Betrieb antreibt, weist eine Keilfläche 32 auf, die unter einem Winkel α zur Antriebskraft bzw. zum Antriebsweg s geneigt ist. Diese Keilfläche 32 greift in eine entsprechend geneigte Keilfläche 34 des Ausgangsteiles 14 ein bzw. kontaktiert diese. Über diese Keilflächen 32, 34 wird eine Kraft auf das Ausgangsteil übertragen, wenn das treibende Teil 12 in Richtung des Pfeils 18 bewegt wird.

Damit das Ausgangsteil linear bzw. axial in Richtung des Pfeils 20 bewegt wird, ist bei dieser Gestaltung erforderlich, dass eine horizontale Lagerkraft F_{Lager,horizontal}, auf das Ausgangsteil 14 wirkt, die durch den Pfeil 36 schematisch dargestellt ist und die im Wesentlichen in der gleichen Richtung wirkt wie die Antriebskraft und die ferner der Antriebskraft der Bewegungsrichtung des Eingangsteils entgegengesetzt ist. Diese horizontale Lagerkraft wirkt auf das Ausgangsteil.

In Fig. 1b ist schematisch dargestellt, dass hierzu ein Lager bzw. Führungselement 38 vorgesehen sein kann, an welchem sich das Ausgangsteil 14 abstützt. Dieses Lager bzw. Führungselement 38 ist im Wesentlichen gehäusefest angeordnet.

Die zuvor dargestellte Gestaltung kann auch als Keilgetriebe bezeichnet werden.

Bei einer weiteren - gegebenenfalls nur der Anmelderin bekannten - Gestaltung eines Stellgetriebes greift eine Mutter in eine Spindel ein. Wenn die Spindel rotatorisch bewegt wird, kann mittels der Mutter translatorisch eine Last bewegt werden. Um allerdings die im Wesentlichen (rein) translatorische Bewegung der Mutter sicherzustellen, muss bei dieser Gestaltung eine Verdrehsicherung an der Mutter vorgesehen sein. Es kann auch vorgesehen sein, dass die Mutter rotatorisch bewegt wird, und die Spindel eine translatorische Bewegung erzeugen soll. Auch bei dieser Gestaltung muss an dem Ausgangsteil, nämlich hier der Spindel, eine Verdrehsicherung vorgesehen sein, um eine rein translatorische Bewegung dieses Ausgangsteils zu erzeugen.

Der Erfindung liegt die Aufgabe zugrunde, ein Stellgetriebe zur Erzeugung einer translatorischen Stellbewegung zu schaffen, welches baulich einfach gestaltet ist, und welches betriebssicher und auf einfache Weise ausgangsseitig eine lineare (Stell)bewegung bereitstellen kann.

Die vorgenannte Aufgabe wird erfindungsgemäß gelöst durch ein Stellgetriebe mit den Merkmalen des Patentanspruches 1. Mit dem erfindungsgemäßen Stellgetriebe wird ein Stellgetriebe zu schaffen, das sich als Bestandteil einer Wählmechanik eines Kraftfahrzeugs einsetzen lässt, und auf einfache Weise betriebssicher eine im Wesentlichen lineare (Stell)bewegung erzeugt, und insbesondere eine bestimmte Übersetzung aufweist.

Das vorliegende Stellgetriebe zur Erzeugung einer translatorischen Stellbewegung umfasst ein getriebenes, getriebeausgangsseitig angeordnetes und im Betrieb rein translatorisch bewegtes Ausgangsteil und zwei dieses Ausgangsteil im Betrieb treibendende Teile, die jeweils beweglich angeordnet sind und jeweils das Ausgangsteil kontaktieren und / oder belasten und / oder in dieses Ausgangsteil eingreifen und die ihrerseits im Betrieb des Stellgetriebes mittels genau einer Antriebseinrichtung von der Antriebsseite gegenläufig angetrieben werden können bzw. werden, wobei das erste treibende Teil im Betrieb des Stellgetriebes im Wesentlichen innerhalb einer ersten Ebene bewegt wird und wobei das zweite treibende Teil im Betrieb des Stellgetriebes im Wesentlichen innerhalb einer zweiten Ebene bewegt wird und wobei ferner das translatorisch bewegte Ausgangsteil bei bzw. mittels einer gegenläufigen Bewegung der treibenden Teile im Wesentlichen senkrecht zu diesen beiden Ebenen bewegt wird.

Es ist insbesondere vorgesehen, dass der in das Ausgangsteil eingeleitete Kraftfluss teilweise über das eine der treibenden Teile eingeleitet wird, und zu einem anderen Teil über das andere der beiden treibenden Teile eingeleitet wird, so dass diese, hinsichtlich des in das Ausgangsteil eingeleiteten Kraftflusses, parallel geschaltet sind. Ferner ist insbesondere vorgesehen, dass die beiden treibenden Teile relativbeweglich zueinander angeordnet sind sowie relativbeweglich zum Ausgangsteil. Dabei ist insbesondere vorgesehen, dass die treibenden Teile sowie das Ausgangsteil relativbeweglich gegenüber einer ruhenden Umgebung, wie beispielsweise Gehäuse oder dergleichen angeordnet sind.

Bevorzugt ist vorgesehen, dass die beiden treibenden Teile jeweils unmittelbar in das Ausgangsteil eingreifen, bzw. das Ausgangsteil unmittelbar kontaktieren und belasten bzw. belasten können.

Die Bewegung, die das erste treibende Teil im Betrieb des Stellgetriebes innerhalb einer ersten Ebene ausführt, kann beispielsweise eine Drehbewegung bzw. eine rotatorische Bewegung sein.

Es können auch bei der Bewegung gewisse Toleranzen gegeben sein, wie beispielsweise die Lagertoleranzen, die dazu führen, dass geringfügige Abweichungen von einer ebenen Bewegung gegeben sind. Beispielsweise kann in diesem Sinne ein erstes oder zweites Teil, das in Betrieb eine Drehbewegung ausführt, also in einer Ebene bewegt wird, axial gehalten werden, um eine Bewegung senkrecht zu dieser Ebene zu verhindern. Dieses axiale Halten kann, zumal bei dieser beispielhaften Gestaltung eine Drehbeweglichkeit gegeben sein soll, mit gewissem Spiel versehen sein. Etwaige Abweichungen aus einer rein ebenen Bewegung, die beispielsweise durch solches Lagerspiel bedingt sind, können gegebenenfalls gegeben sein.

Es kann beispielsweise auch vorgesehen sein, dass das erste und das zweite treibenden Teil im Wesentlichen rein translatorisch, insbesondere linear, bewegt wird. Auch solche Bewegungsbahnen liegen jeweils innerhalb einer Ebene. Dabei kann auch ein gewisses Spiel, insbesondere Lagerspiel gegeben sein, welches geringe Abweichungen von einer rein ebenen Bewegung bedingen kann. Dabei kann ferner vorgesehen sein, dass die beiden treibenden Teile auf parallelen Bewegungsbahnen bewegt werden.

Die angesprochene Bewegung in einer Ebene meint insbesondere, dass die im Betrieb gegebene Bewegungsbahn des betreffenden Teils in einer Ebene liegt bzw. im Wesentlichen in einer Ebene liegt. Diese Bewegungsbahnen können insbesondere durch die Belastungsrichtung von in die jeweiligen treibenden Teile eingreifenden Bauteilen, die die treibenden Teile ihrerseits antreiben, und / oder durch Lager- und / oder Führungsmittel bestimmt bzw. entsprechend vorgegeben bzw. eingeschränkt sein.

Erfindungsgemäß wird ferner insbesondere ein Stellgetriebe zur Erzeugung einer translatorischen Stellbewegung vorgeschlagen mit einem getriebenen, getriebeausgangsseitig angeordneten und im Betrieb rein translatorisch bewegten Ausgangsteil und zwei dieses Ausgangsteil im Betrieb treibendenden Teilen, die jeweils beweglich angeordnet sind und jeweils das Ausgangsteil kontaktieren und / oder belasten und / oder in dieses Ausgangsteil eingreifen und die ihrerseits im Betrieb des Stellgetriebes mittels wenigstens einer Antriebseinrichtung von der Antriebsseite gegenläufig angetrieben werden können bzw. werden, wobei das Ausgangsteil eine Spindel ist und das erste treibende Teil eine rechtsgängige Mutter ist und das zweite treibendende Teil eine linksgängige Mutter ist.

Es ist also insbesondere eine Mutter sowie eine andere Mutter mit entgegengesetzter Steigungsrichtung vorgesehen. Die Spindel hat insbesondere beide Steigungsrichtungen, ist also rechts- und linksgängig.

Die Spindel kann beispielsweise eine Hohlspindel sein. Sie kann auch eine Spindel aus Vollmaterial sein. Die rechtsgängige Mutter, also die Mutter mit Rechtsgewinde sowie die linksgängige Mutter, also die Mutter mit Linksgewinde, greifen insbesondere in die Spindel ein. Es ist vorgesehen, dass die Drehachse der linksgängigen Mutter und der rechtsgängigen Mutter zusammenfallen, und diese Muttern axial versetzt zueinander angeordnet sind.

Vorzugsweise ist auf der Außenmantelfläche der Spindel ein Gewindeabschnitt zur Aufnahme der rechtsgängigen Mutter sowie ein Gewindeabschnitt zur Aufnahme der linksgängigen Mutter vorgesehen. Diese Gewindeabschnitte können axial so beabstandet sein, dass der eine Gewindeabschnitt nur die rechtsgängige Mutter aufnehmen kann, und der andere Gewindeabschnitt nur die linksgängige Mutter aufnehmen kann.

Besonders bevorzugt ist allerdings vorgesehen, dass die Spindel eine rechts- und linksgängige Spindel ist, bei der in im Wesentlichen identischen axialen Abschnitten sowohl die rechtsgängige Mutter, als auch die linksgängige Mutter aufgenommen werden bzw. eingreifen kann. Hierdurch kann in bestimmten Anwendungen Bauraum gespart werden. So kann beispielsweise, wenn ein bestimmter Verstellbereich der Spindel hinsichtlich der rechtsgängigen Mutter sowie ein bestimmter Verstellbereich der Spindel hinsichtlich der linksgängigen Mutter gewährleistet sein soll, die Muttern relativ nahe aneinander angeordnet werden, da identische Spindelabschnitte sowohl durch das Gewinde der linksgängigen Mutter als auch durch das Gewinde der rechtsgängigen bewegt werden können. Aber auch in Gestaltungen, bei denen nicht Bauraum gespart werden soll, ist der Einsatz einer solchen rechts- und linksgängigen Spindel, bei der in den gleichen axialen Abschnitten sowohl eine rechtsgängige, als auch eine linksgängige Mutter eingreifen kann, bevorzugt. Eine solche Spindel kann beispielsweise eine Art Rautenprofil aufweisen.

Vorzugsweise ist vorgesehen, dass das Linksgewinde der Spindel und das Rechtsgewinde der Spindel die gleiche Steigung aufweisen. Ferner ist bevorzugt, dass das Linksgewinde der linksgängigen Mutter und das Rechtsgewinde der rechtsgängigen Mutter die gleiche Steigung aufweisen. Insbesondere ist vorgesehen, dass das Linksgewinde der linksgängigen Mutter und der linksgängigen Spindel die gleiche Steigung aufweisen, und das Rechtsgewinde der rechtsgängigen Spindel der rechtsgängigen Mutter die gleiche Steigung aufweisen.

Bevorzugt ist ferner, dass die Durchmesser, wie insbesondere der jeweilige Teilkreisdurchmesser, der Gewinde der rechtsgängigen Mutter sowie der linksgängigen Mutter identisch sind; entsprechendes ist für das Linksgewinde und das Rechtsgewinde der Spindel bevorzugt.

Die erste bzw. rechtsgängige Mutter sowie die zweite bzw. linksgängige Mutter können mit einer Verzahnung versehen sein. Eine solche Verzahnung kann beispielsweise auf einer Außenmantelfläche der jeweiligen betreffenden Mutter angeordnet sein. Sie kann auch auf einer Stirnfläche der betreffenden Mutter(n) angeordnet sein. So kann beispielsweise vorgesehen sein, dass die linksgängige sowie die rechtsgängige Mutter jeweils auf der der jeweils anderen Mutter zugewandten Stirnseite eine Verzahnung trägt. Derartige Verzahnungen können beispielsweise zum Eingriff von einem oder mehreren Zahnrädern vorgesehen sein, über welches die linksgängige bzw. die rechtsgängige Mutter angetrieben werden kann. Es kann vorgesehen sein, dass in die Verzahnung der linksgängigen Mutter in ein erstes Zahnrad zum Antreiben dieser Mutter eingreift, und die rechtsgängige Mutter in ein zweites, vom ersten verschiedenes, Zahnrad zum Antreiben der zweiten Mutter. Es kann auch vorgesehen sein, dass genau ein Zahnrad sowohl in die Verzahnung der ersten Mutter als auch in die Verzahnung der zweiten Mutter eingreift, um diese jeweiligen Muttern in Betrieb jeweils anzutreiben. Insbesondere kann vorgesehen sein, dass ein solches Zahnrad zwischen den Muttern angeordnet ist, und in eine jeweilige Verzahnung der Muttern eingreift, die jeweils an der der anderen Mutter zugewandten Stirnseite dieser jeweiligen Mutter vorgesehen ist. Hierdurch kann beispielsweise mittels eines in beide Muttern eingreifenden Zahnrades eine gegenläufige Drehbewegung der beiden Muttern erzeugt werden. Die rechtsgängige sowie die linksgängige Mutter können grundsätzlich durch Getriebe bzw. Getriebearten angetrieben werden, bzw. durch Verzahnungen, die in unterschiedlichster Weise gestaltet sein können.

Bevorzugt ist allerdings, dass ein solches Getriebe bzw. Teilgetriebe, welches die Muttern antreibt, eine vorbestimmte Übersetzung jeweils aufweisen, die so ist, dass eine bestimmte Gesamtübersetzung ohne zusätzliche Vorübersetzung erreicht wird.

Vorzugsweise werden die beiden Muttern über ein solches (Teil)Getriebe mit dem gleichen Winkel, also insbesondere Verzahnungswinkel, angetrieben, und zwar entgegengesetzt.

Ein solches (Teil)getriebe kann beispielsweise ein Stirnradgetriebe oder ein Kegelradgetriebe, oder ein Kegelschraubradgetriebe sein; es können insbesondere entsprechende Verzahnungen oder Kontaktbereiche vorgesehen sein. Auch andere Gestaltungen eines solchen (Teil)Getriebes sind bevorzugt. Beispielsweise kann auch vorgesehen sein, dass ein solches (Teil)Getriebe keine Verzahnung aufweist. Ein solches (Teil)Getriebe kann beispielsweise ein Reibradgetriebe, wie Kegelreibradgetriebe, sein.

Insbesondere ist vorgesehen, dass die beiden Muttern (im Betrieb) mittels eines (Teil)Getriebes gegenläufig so angetrieben werden, dass ihre Geschwindigkeit, insbesondere Drehgeschwindigkeit, gleich ist, wobei insbesondere vorgesehen sein kann, dass die Muttern mit dem gleichen Winkel, insbesondere Verzahnungswinkel, angetrieben werden bzw. werden können.

Besonders bevorzugt ist vorgesehen, dass dieses (Teil)getriebe ein Kronenradgetriebe ist. Es ist also vorzugsweise an den Muttern eine Kronenradverzahnung vorgesehen.

Besonders bevorzugt ist vorgesehen, dass die Muttern auf den der jeweils anderen Mutter zugewandten Stirnseite eine Kronradverzahnung aufweisen, und (axial) zwischen diesen Muttern ein Zahnrad angeordnet ist, welches sowohl in die Kronradverzahnung der linksgängigen Mutter als auch in die Kronradverzahnung der rechtsgängigen Mutter eingreift, und diese somit im Betrieb gegenläufig antreibt. Dabei können insbesondere auch die Winkel bzw. Verzahnungswinkel gleich sein, bzw. die Muttern mit dem gleichen Winkel angetrieben werden. Insbesondere ist vorgesehen, dass die Muttern dabei mit der gleichen Geschwindigkeit, insbesondere Drehgeschwindigkeit, angetrieben bzw. bewegt werden, und zwar gegenläufig, also in entgegengesetzter Richtung bzw. Drehrichtung.

Beispiele für Kronenradverzahnungen bzw. Kronenradgetriebe sind in G. Niemann, H. Winter, Maschinenelemente, Band 3, 2. Auflage, Springer Verlag, 1986, Seite 20 bis 23 (ISBN 3-540-10317-1) und in Karlheinz Roth - Zahnradtechnik - Evolventen-Sonderverzahnungen zur Getriebeverbesserung, Springer Verlag, 1998, Seite 305 bis 358 (ISBN 3-540-64236-6) dargestellt, die vollumfänglich zum Gegenstand dieser Offenbarung gemacht werden, und die Erfindung hinsichtlich dieser Kronenradverzahnungen bzw. Kronenrad(teil)getriebe bevorzugte Weiterbildungen aufzeigt.

Besonders bevorzugt ist vorgesehen, dass ein Zahnrad sowohl die linksgängige als auch die rechtsgängige Mutter antreibt, und die Drehachse dieses Zahnrades im Wesentlichen senkrecht zu der Drehachse der beiden Muttern und /oder der Spindel ausgerichtet ist.

Ein derartiges Zahnrad bzw. derartige Zahnräder, die die Muttern in Betrieb antreiben, werden vorzugsweise ihrerseits von einer Antriebseinrichtung, wie beispielsweise Elektromotor, angetrieben. Besonders bevorzugt ist vorgesehen, dass beide Muttern mittels des gleichen Elektromotors angetrieben werden. Beispielsweise kann die Ausgangswelle eines Elektromotors ein Zahnrad tragen, welches, beispielsweise in oben skizzierter Weise, sowohl in eine Verzahnung der linksgängigen Mutter als auch in eine Verzahnung der rechtsgängigen Mutter so eingreift, dass diese Muttern gegenläufig bzw. in entgegengesetztem Drehsinn angetrieben werden.

Es kann auch vorgesehen sein, dass die linksgängige Mutter und die rechtsgängige Mutter von genau einem Elektromotor gegenläufig angetrieben werden, wobei die Übersetzung zwischen der Motorausgangswelle und der linksgängigen Mutter betragsmäßig mit der Übersetzung zwischen der Motorausgangswelle und der rechtsgängigen Mutter übereinstimmt.

In einer bevorzugten Gestaltung ist eine Lager- und / oder Führungseinrichtung und / oder Koppeleinrichtung vorgesehen, die im Wesentlichen eine Relativbeweglichkeit zwischen der ersten und der zweiten Mutter in einer oder beiden Orientierungen der Richtung blockiert, in welcher das Ausgangsteil im Betrieb translatorisch bewegt wird, so dass die erste und die zweite Mutter im Wesentlichen nur in Drehrichtung relativbeweglich zu einander angeordnet sind. Beispielsweise kann eine solche Einrichtung so sein, dass sie die Anordnung der beiden Muttern axial außen umgreift; ferner kann eine solche Einrichtung - insbesondere ergänzend - so sein, dass sich die Muttern über diese Einrichtung axial innen gegeneinander abstützen; es kann auch vorgesehen sein, dass die Muttern auf den axial einander zugewandten Seiten jeweils - z.B. über gehäusefest angeordnete Teile - axial gehalten werden. Solche Einrichtungen können beispielsweise so sein, dass sie sich auch an einem festen Gehäuse oder dergleichen abstützen oder so, dass sie nur die Muttern relativ zueinander axial blockieren und / oder abstützen ohne in ein derartiges festes Gehäuse oder dergleichen einzugreifen. Solche Einrichtungen können beispielsweise aus Kunststoff oder Metall sein. Vorzugsweise ist eine solche Einrichtung von einem Zahnrad verschieden, welches von einem Antrieb belastet wird und in beide Muttern eingreift, sofern ein solches Zahnrad - in bevorzugter Gestaltung - gegeben ist. Im Hinblick auf das Blockieren der axialen Relativbeweglichkeit kann auch ein gewisses (Lager)Spiel gegeben sein.

Das Stellgetriebe mit Spindel ist insbesondere ein Spindelantrieb oder Spindelgetriebe.

Es ist insbesondere vorgesehen, dass das Stellgetriebe mit Spindel so ist bzw. die Spindel im Betrieb so von den beiden Muttern belastet wird, dass diese Spindel (im Wesentlichen rein) translatorisch, insbesondere linear, bewegt wird, ohne dass eine Verdrehsicherung an der Spindel erforderlich ist.

Dies kann beispielsweise dadurch verwirklicht werden, dass die beiden Muttern, die eine entgegengesetzte Steigungsrichtung aufweisen, von denen also eine ein linksgängiges Gewinde aufweist und die andere ein rechtsgängiges Gewinde, jeweils die gleiche Gewindesteigung aufweisen und in jeweils entsprechende Gewinde (mit entgegengesetzter Steigungsrichtung) der Spindel eingreifen. Das Gewinde der Spindel kann dabei beispielsweise auch so links- und rechtsgängig sein, dass einerseits die linksgängige Mutter und andererseits die rechtsgängige Mutter in gleichen Axialabschnitten der Spindel aufgenommen bzw. verschraubt werden können. Im Betrieb werden die Muttern mit der gleichen Geschwindigkeit und gegenläufig bzw. mit umgekehrtem Drehsinn angetrieben bzw. bewegt. Dabei wird die Spindel translatorisch bewegt, ohne dass eine Verdrehsicherung erforderlich ist; also insbesondere eine Verdrehsicherung, die von den eingreifenden Muttern verschieden ist.

Der Antrieb der Muttern kann insbesondere auch in dieser Gestaltung mittels eines Zahnrades erfolgen, dass sowohl in eine an der linksgängigen Mutter angeordnete Verzahnung als auch in eine an der rechtsgängigen Mutter angeordnete Verzahnung eingreift. Die Verzahnungen der Muttern können beispielsweise auf den der jeweils anderen Mutter zugewandten Stirnseiten angeordnet sein, und sind vorzugsweise Kronenradverzahnungen. Insbesondere ist dabei vorgesehen, dass die Winkel bzw. Verzahnungswinkel jeweils gleich sind. Durch eine solche Gestaltung kann beispielsweise erreicht werden, dass die Muttern mit der gleichen Geschwindigkeit und gegenläufig angetrieben werden, und gegebenenfalls sogar mittels eines Elektromotors. Das Vorgenannte kann aber auch auf andere Art erreicht werden; wie beispielsweise mittels diverser Übersetzungsstufen, die im Zusammenwirken einerseits den entgegengesetzten Drehsinn der Muttern und andererseits die gleiche Drehgeschwindigkeit bewirken.

Es kann aber auch (zusätzlich) eine Verdrehsicherung an der Spindel vorgesehen sein.

Die Aufgabe wird ferner insbesondere gelöst durch ein Stellgetriebe zur Erzeugung einer translatorischen Stellbewegung mit einem getriebenen, getriebeausgangsseitig angeordneten und im Betrieb im Wesentlichen rein translatorisch bewegten Ausgangsteil und zwei dieses Ausgangsteil im Betrieb treibenden Teilen, die jeweils beweglich angeordnet sind und jeweils das Ausgangsteil kontaktieren und / oder belasten und / oder in dieses Ausgangsteil eingreifen und die ihrerseits im Betrieb des Stellgetriebes mittels wenigstens einer Antriebseinrichtung von der Antriebsseite gegenläufig angetrieben werden können bzw. werden, wobei das erste und das zweite treibende Teil jeweils eine zur Bewegungsrichtung des betreffenden Teils geneigte Fläche aufweist, die jeweils eine entsprechend geneigte Fläche des Ausgangsteils zur Kraftübertragung im Betrieb kontaktiert.

Über diese sich jeweils kontaktierenden bzw. ineinandereingreifenden Flächen kann das Ausgangsteil im Betrieb insbesondere so mittels der beiden treibenden Teile belastetet werden, dass das Ausgangsteil im Wesentlichen translatorisch, insbesondere linear bewegt wird; und zwar insbesondere senkrecht zur Bewegungsrichtung des ersten und zweiten treibenden Teils.

Es kann beispielsweise vorgesehen sein, dass das erste und das zweite treibende Teil Keile sind bzw. Keilflächen aufweisen, die geneigt zur Bewegungsrichtung dieser Teile verlaufen, und dass das Ausgangsteil zwei Keilflächen aufweist, von denen eine jeweilige in eine jeweilige Keilfläche des jeweiligen treibenden Teils eingreift bzw. kontaktiert. Die Keilflächen der treibenden Teile können beispielsweise die gleiche Steigung und eine gegenläufige Steigungsrichtung aufweisen.

Die Keilflächen können vorzugsweise jeweils eben sein.

Es kann auch vorgesehen sein, dass anstelle von Keilflächen gekrümmte Bereiche vorgesehen sind.

Bevorzugt ist vorgesehen, dass eine Lagerkraft senkrecht zur Bewegungsrichtung des Ausgangsteils (insbesondere horizontale Lagerkraft) nicht erforderlich bzw. nicht vorhanden ist und trotzdem dieses Ausgangsteil translatorisch bzw. axial bewegt wird. Dies kann beispielweise durch die folgende Gestaltung erreicht werden: Im Betrieb werden das erste und das zweite treibende Teil mit Keilfläche eines solchen Stellgetriebes, bzw. Keilgetriebes, gegenläufig angetrieben und vorzugsweise so, dass diese treibenden Teile mit der gleichen Geschwindigkeit bewegt werden. Insbesondere werden die beiden treibenden Teile bzw. treibenden Teile mit Keilfläche in entgegengesetzter Bewegungsrichtung bzw. mit entgegengesetzter, in diese Teile eingeleiteter Antriebskraft bewegt und / oder belastet, und zwar insbesondere linear, wobei besonders bevorzugt ist, dass über diese Teile jeweils die gleiche Kraft bzw. Antriebskraft, also insbesondere die halbe Gesamtantriebskraft, in das Ausgangsteil eingeleitet wird. Dabei wird das Ausgangsteil senkrecht zur Bewegungsrichtung der treibenden Teile bewegt bzw. belastet, ohne, dass das Ausgangsteil - abgesehen von den Kontaktbereichen zwischen den beiden treibenden Teilen und dem Ausgangsteil - senkrecht zu seiner Bewegungsrichtung abgestützt bzw. belastet werden muss.

Ferner kann vorgesehen sein, das erste und das zweite treibende Teil so gelagert bzw. geführt sind, dass diese Teile im Betrieb jeweils translatorisch, insbesondere linear, bewegt werden.

Vorzugsweise weist das erfindungsgemäße Stellgetriebe eine Antriebseinrichtung auf, mittels welcher das erste treibende Teil, wie Keil oder Mutter, sowie das zweite treibende Teil, wie Keil oder Mutter, im Betrieb angetrieben wird. Es kann vorgesehen sein, dass die Antriebseinrichtung einen Elektromotor aufweist. Es ist vorgesehen, dass das erste und das zweite treibende Teil von demselben Elektromotor angetrieben werden. Eine Steuerungseinrichtung zur Steuerung der Betätigung bzw. Strom- bzw. Spannungsversorgung des Elektromotor kann vorgesehen sein, wenn nur ein Elektromotor oder eine anders gestaltete Antriebseinrichtung vorgesehen ist. Mittels einer solchen Steuerungseinrichtung kann beispielweise die Belastung und / oder Bewegung der treibenden Teile gesteuert werden bzw. des Ausgangsteils bzw. einer entsprechenden Antriebseinrichtung. Die Steuerungseinrichtung kann auch zu einer Regelungseinrichtung erweitert sein.

Das erste und das zweite treibende Teil sind vorzugsweise im Kraftfluss zwischen einer Antriebseinrichtung und dem Ausgangsteil angeordnet, wobei der Kraftfluss in das Ausgangsteil einerseits über das erste und andererseits, nach Art einer Parallelschaltung, über das zweite treibende Teil geleitet wird.

Vorzugsweise belasten das erste und das zweite treibende Teil im Betrieb das Ausgangsteil so, dass die vektoriell resultierende Kraft aus der vektoriellen Kraft, die vom ersten treibenden Teil auf das Ausgangsteil übertragen wird, und der vektoriellen Kraft, die vom zweiten treibenden Teil auf das Ausgangsteil übertragen wird, in Achsrichtung des Ausgangsteils gelegen ist. Dies kann beispielsweise durch oben oder im Folgenden beschriebene Gestaltungen realisiert sein, wie beispielsweise Gestaltungen, bei denen die treibenden Teile mit gegenläufiger, gleicher Steigung (bzw. Steigungswinkel des Gewindes) versehen sind und gegenläufig bzw. entgegengesetzt mit der gleichen Geschwindigkeit bewegt bzw. angetrieben werden.

Es kann aber auch auf andere Weise erreicht werden, wie beispielsweise über entsprechende Abstimmung von Schrägen bzw. Steigungen (insbesondere Gewindesteigungen) und treibenden Kräften bzw. Bewegungsgeschwindigkeiten der treibenden Teile, wobei auch hier die treibenden Teile gegenläufig angetrieben werden.

Insbesondere kann vorgesehen sein, dass das erste und das zweite treibende Teil im Betrieb mit der gleichen Geschwindigkeit bzw. Drehzahl bewegt werden. Dies kann beispielweise mittels einer entsprechende Antreibseinrichtung und /oder einer entsprechenden Übertragungsmechanik zwischen Antriebseinrichtung und den treibenden Teilen bewirkt werden.

Es kann wenigstens eine vom Ausgangsteil verschiedene Lager- und / oder Führungseinrichtung vorgesehen sein, mittels welcher die treibenden Teile geführt und / oder gelagert werden.

Bevorzugt ist das Stellgetriebe eine Wählmechanik für ein Kraftfahrzeuggetriebe bzw. Bestandteil einer solchen. Eine solche Wählmechanik bzw. ein solches Stellgetriebe kann so sein, dass es rückwärts nicht selbsthemmend ist. Insbesondere kann vorgesehen sein, dass das Stellgetriebe bzw. die Wählmechanik eine bestimmte Übersetzung aufweist. Das Stellgetriebe kann insbesondere als Wählmechanik bzw. Bestandteil einer solchen für einen Getriebeaktor, wie beispielsweise einen Getriebeaktor eines Automatisierten Schaltgetriebes (ASG) oder eines Parallel-Schaltgetriebes (PSG) oder eines unterbrechungsfreien Schaltgetriebes (USG) in einem Kraftfahrzeug verwendet werden. Es kann jedoch auch für andere Getriebeaufgaben eingesetzt werden.

Das als Betätigungsvorrichtung eingesetzte Stellgetriebe kann einen Elektromotor aufweisen, der dieses im Betrieb antreibt und von einem elektronischen Steuergerät angesteuert wird. Ein solches elektronisches Steuergerät kann beispielsweise ein Getriebesteuergerät sein.

Das Stellgetriebe kann als Ausgangsteil eine Spindel aufweisen. Diese Spindel kann beispielsweise als Hohlspindel gestaltet sein, und in ihrem Inneren eine Schaltwelle zum Betätigen eines Kraftfahrzeug(haupt)getriebes aufnehmen. Die Schaltwelle kann dabei dreh- bzw. schwenkbar gegenüber der Hohlspindel sein, sowie gegenüber dieser axial gesichert, so dass die Schaltwelle bei einer Axialbewegung der Hohlspindel axial mitgenommen wird. Dabei kann dann eine Stellbewegung bzw. eine Betätigung eines Umbauteils, wie Schaltfinger und / oder Schaltgabel und / oder Schaltmuffe, durch diese Axialbewegung bzw. Axiallast bewirkt werden. Eine weitere Stellbewegung bzw. Betätigung kann bei dieser Gestaltung durch ein Verdrehen bzw. Schwenken der Schaltwelle bewirkt werden. Zu diesem Verdrehen bzw. Schwenken kann ein weiteres Antriebssystem vorgesehen sein. Dies kann beispielsweise einen Elektromotor aufweisen, der vorzugsweise von dem Elektromotor verschieden ist, der bereits im Zusammenhang mit dem erfindungsgemäßen Stellgetriebe genannt wurde. Der zweite Elektromotor kann eine Ausgangswelle aufweisen, die eine Verzahnung trägt. Diese Verzahnung kann in eine Verzahnung der Schaltwelle so eingreifen, dass das Schwenken bzw. Verdrehen der Schaltwelle bewirkt werden kann. Es kann dabei vorgesehen sein, dass durch die Axialverschiebung bzw. -bewegung der Schaltwelle das "Wählen" bewirkt werden kann und durch die Dreh- bzw. Schwenkbewegung das "Schalten". "Wählen" und "Schalten" sind bekannte Vorgänge beim Betätigen von Getrieben.

Im folgenden werden nun beispielhafte bzw. bevorzugte Gestaltungen der Erfindung anhand von Fig. erläutert, wobei die Erfindung hierdurch nicht beschränkt werden soll.

Es zeigt:
- Fig. 1a: eine Gestaltung eines der Anmelderin - gegebenenfalls aber nur intern - vorbekannten Stellgetriebes;
- Fig. 1b: eine Gestaltung eines der Anmelderin - gegebenenfalls aber nur intern - vorbekannten Stellgetriebes;
- Fig. 2: eine schematische beispielhafte Gestaltung eines vorliegenden Kraftfahr- zeuggetriebes mit beispielhafter vorliegender Betätigungseinrichtung und beispielhaftem erfindungsgemäßen Stellgetriebe zur Erzeugung einer translatorischen Stellbewegung;
- Fig. 3: eine schematische teilgeschnittene beispielhafte Gestaltung eines erfin- dungsgemäßen Stellgetriebes zur Erzeugung einer translatorischen Stell- bewegung;
- Fig. 4: eine schematische teilgeschnittene beispielhafte Gestaltung eines erfin- dungsgemäßen Stellgetriebes zur Erzeugung einer translatorischen Stell- bewegung;
- Fig. 5: eine schematische teilgeschnittene beispielhafte Gestaltung eines erfin- dungsgemäßen Stellgetriebes zur Erzeugung einer translatorischen Stell- bewegung; und
- Fig. 6: eine schematische teilgeschnittene beispielhafte Gestaltung eines erfin- dungsgemäßen Stellgetriebes zur Erzeugung einer translatorischen Stell- bewegung.

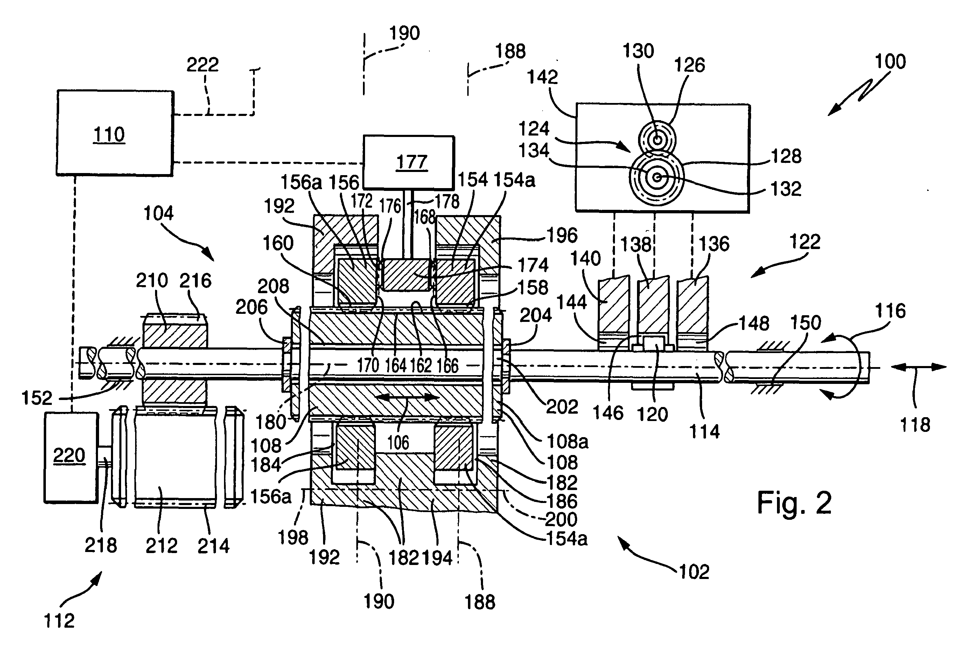

Fig. 2 zeigt eine beispielhafte Ausführungsform der Erfindung in schematischer Darstellung.

In Fig. 2 ist insbesondere ein Kraftfahrzeuggetriebe bzw. Kraftfahrzeughauptgetriebe 100 gezeigt, sowie eine Betätigungseinrichtung 102, mittels welcher Gangwechselvorgänge des Kraftfahrzeuggetriebes 100 bewirkt bzw. geschaltet werden können. Ferner zeigt Fig. 2 ein Stellgetriebe 104, welches hier Bestandteil der Betätigungsvorrichtung 102 ist und, wie durch den Doppelpfeil 106 angedeutet, eine translatorische Stellbewegung eines Ausgangsteils 108, das hier eine Spindel ist, erzeugen bzw. bewirken kann. Ferner ist in Fig. 2 ein elektronisches Steuergerät 110 gezeigt, das hier insbesondere ein Getriebesteuergerät ist, gegebenenfalls aber auch andere Funktionalitäten übernehmen kann.

Neben der beispielhaften erfindungsgemäßen Stelleinrichtung 104, die eine translatorische Bewegung eines Ausgangsteils bzw. einer Spindel 108 erzeugen kann, ist in der Gestaltung gemäß Fig. 2 ein weiteres Stellgetriebe 112 vorgesehen, mittels welchem eine rotatorische Stellbewegung erzeugt werden kann.

In der Gestaltung gemäß Fig. 2 ist das Stellgetriebe zur Erzeugung einer translatorischen Stellbewegung 104 sowie das Stellgetriebe 112 zur Erzeugung einer rotatorischen Stellbewegung jeweils ausgangsseitig mit einer Schaltwelle 114 gekoppelt. Diese Kopplungen werden später noch beispielhaft erläutert; ebenso wird später noch beispielhaft erläutert, wie diese rotatorische und diese translatorische Stellbewegung erzeugt werden kann.

Mittels des Stellgetriebes 112 ist es somit möglich, die Schaltwelle 114, wie durch den Doppelpfeil 116 angedeutet, rotatorisch zu bewegen, und mittels des Stellgetriebes 104 ist es somit möglich, die Schaltwelle 114 translatorisch zu bewegen, wie durch den Doppelpfeil 118 schematisch angedeutet ist.

In der beispielhaften Gestaltung gemäß Fig. 2 trägt die Schaltwelle 114 einen axial- und drehfest mit dieser Schaltwelle verbundenen Schaltfinger 120, der somit auch mittels der Stellgetriebe 104, 112 über die Schaltwelle 114 axial und rotatorisch bewegt werden kann.

Es ist ferner ein Übertragungsmechanismus, wie insbesondere mechanischer Übertragungsmechanismus 122, vorgesehen, mittels welchem eine Belastung des Schaltfingers 120 so übertragen werden kann, dass zwischen Gangstufen 124, die schematisch angedeutet sind, der Getriebeeinrichtung gewechselt bzw. hin- und hergeschaltet werden kann. Die Getriebestufen weisen Zahnräder 126, 128 auf, die ineinander eingreifen. Solche Zahnräder sind auf Wellen 130, 132 angeordnet. Es kann insbesondere vorgesehen sein, dass mittels des Übertragungsmechanismus Schiebemuffen 134 betätigt werden können, die in eine Synchronisation eingreifen und eine drehfeste Verbindung zwischen einem drehbar gelagerten Zahnrad 128 auf der betreffenden Welle 132 erzeugen können. Dies kann aber auch anders gestaltet sein. Der Übertragungsmechanismus 122 kann beispielsweise Schaltgabeln 136, 138, 140 aufweisen. Die Anzahl solcher Schaltgabeln 136, 138, 140 kann je nach Getriebe verschieden sein. Auch die Art der Zahnradpaarung etc. ist hier lediglich sehr grob schematisch angedeutet, insbesondere auch durch die Blackbox 142.

Die Teile 136, 138, 140, die insbesondere Schaltgabeln sein können, weisen in der Gestaltung gemäß Fig. 2 jeweils ein Schaltmaul 144, 146, 148 auf. Ein solches Schaltmaul kann beispielsweise eine Durchgangsausnehmung sein, die das axiale Durch-Bewegen des Schaltfingers 120 ermöglicht und gleichzeitig bei einer Verdrehung des Schaltfingers 120 in Drehrichtung 116 bewirkt, dass das betreffende Teil 136, 138, 140 vom Schaltfinger mitgenommen wird, und eine entsprechende Betätigung zum Wechseln von Gangstufen 124 ausgelöst wird, die insbesondere das eigentliche "Schalten" darstellt.

Es kann also durch Verdrehung der Schaltwelle 114 mittels des Schaltfingers das "Schalten" in der Getriebeeinrichtung bewirkt werden, während durch eine Axialverschiebung in Richtung des Pfeils 118 das "Wählen" bewirkt werden kann. Das "Wählen" ist dabei insbesondere so, dass der Schaltfinger 120 in Position eines Schaltmauls 144 bzw. 146 bzw. 148 gebracht wird, so dass ein anschließendes Verdrehen der Schaltwelle 114, bzw. des Schaltfingers 120 das betreffende Teil 136 bzw. 138 bzw. 140 belastet. In Fig. 2 ist es so gezeichnet, dass der Schaltfinger 120 - in Wählrichtung 118 gesehen - so in Position gebracht ist, dass über das Teil 138 eine diesem Teil zugeordnete Schaltmuffe betätigt werden kann, und dieser Schaltmuffe zugeordneten Gangstufen geschaltet werden können.

Die Schaltwelle 114 kann beispielsweise drehbar und axial verschieblich mittels geeigneter Lagermittel 150, 152 gelagert sein.

Im Folgenden soll nun erläutert werden, wie in der beispielhaften Gestaltung gemäß Fig. 2 diese translatorische und rotatorische Bewegung des Schaltfingers bzw. der Schaltwelle erzeugt werden kann, bzw. erzeugt wird.

Das Stellgetriebe 104 zur Erzeugung einer translatorischen bzw. axialen bzw. linearen Bewegung des als Spindel 108a bzw. Hohlspindel 108a gestalteten Ausgangsteils, weist die genannte Hohlspindel 108a auf und weist zwei treibende Teile 154, 156 auf. Die treibenden Teile 154, 156 sind in der Gestaltung gemäß Fig. 2 Muttern 154a, 156a.

Diese Muttern 154a, 156a weisen Gewinde 158, 160 auf, die eine entgegengesetzte Steigungsrichtung haben.

Beispielsweise weist eine erste diese Muttern 154a ein Rechtsgewinde 158 auf, und die zweite dieser Muttern 156a ein Linksgewinde 160. Dies kann aber ebenso auch umgekehrt sein.

Das Rechtsgewinde 158 der ersten Mutter 154a greift in ein Gewinde 162 der Spindel 108a ein. In der Gestaltung gemäß Fig. 2 ist vorgesehen, dass auch das Linksgewinde 160 der Mutter 156a in dieses Gewinde 162 der Spindel 108a eingreift. Die Spindel 108a ist mit einem links- und rechtsgängigen Gewinde 162 versehen, welches so ist, dass an gleichen Stellen der Axialrichtung der Spindel 108 sowohl das rechtsgängige Gewinde 158 der Mutter 154a, als auch das linksgängige Gewinde 160 der Mutter 156a eingreifen kann. Eine solche Axialstellung ist beispielhaft mit dem Bezugszeichen 164 angedeutet. Es könnte also beispielsweise - wenn ein entsprechender Verstellbereich vorgesehen ist - die Spindel 108a relativ zur Mutter 154a so bewegt werden, dass die Mutter 154a im Bereich 164 mit ihrem rechtsgängigen Gewinde 158 in die Spindel 108 eingreift, und es könnte bei Bewegung in der entgegengesetzten Richtung, die Relativstellung zwischen der zweiten Mutter 156a und der Spindel 108a so verändert werden, dass das Linksgewinde 160 der zweiten Mutter 156a im Bereich der Stelle 164 der Spindel 108a in diese Spindel eingreift.

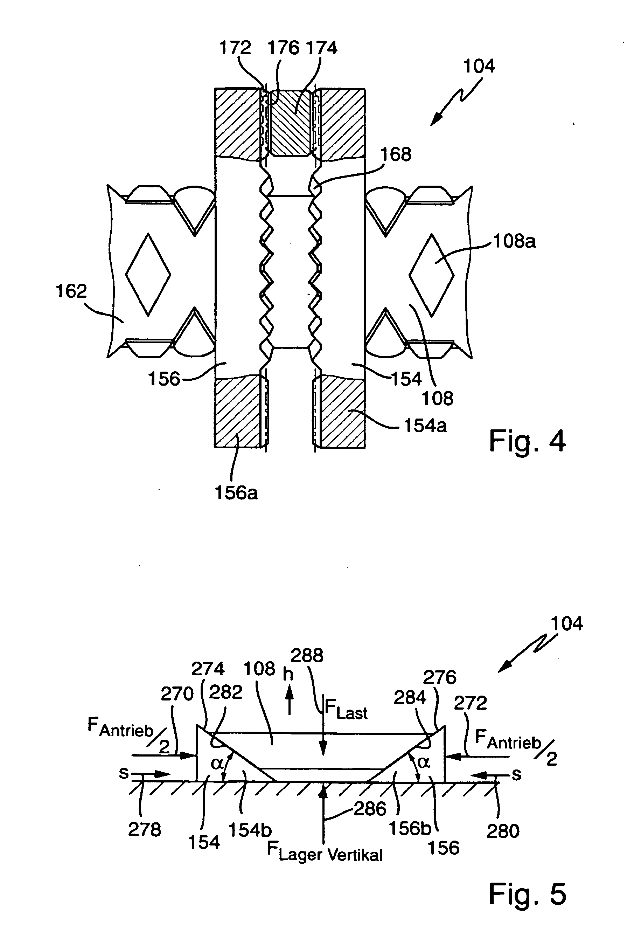

Eine beispielhafte Gestaltung einer solchen links- und rechtsgängigen Spindel ist in Fig. 4 gezeigt.

Es kann auch vorgesehen sein, dass das Gewinde 162 verschiedene Bereiche aufweist, wobei ein Bereich ein linksgängiges Gewinde und ein davon verschiedener Bereich ein rechtsgängiges Gewinde ist, so dass die Gewinde 158, 160 jeweils nur in einem dieser Gewindebereiche der Mutter eingreifen können.

Die erste, rechtsgängige Mutter 154a trägt im Bereich ihrer der zweiten Mutter 156a zugewandten Stirnseite 166 eine Kronenradverzahnung 168, und die zweite, linksgängige Mutter 156a trägt auf ihrer der ersten Mutter 154a zugewandten Stirnseite 170 ebenfalls eine Kronenradverzahnung 172.

In beide dieser Kronenradverzahnungen 168, 172 greift ein Zahnrad 174 mit seiner Verzahnung 176 ein. Das Zahnrad 174 wird von einer Antriebseinrichtung, die hier als Elektromotor 177 gestaltet ist, angetrieben, der mit einer Motorausgangswelle 168 versehen ist. In der Gestaltung gemäß Fig. 2 trägt diese Motorausgangswelle 178 das Zahnrad 174. Es kann alternativ eine Übersetzungsstufe, oder auch mehrere Übersetzungsstufen zwischen der Motorausgangswelle 178 und dem Zahnrad 174 vorgesehen sein.

Wenn das Zahnrad 174 im Betrieb von dem Elektromotor 177 angetrieben wird, werden die Muttern 154a, 156a gegenläufig, nämlich im entgegengesetzten Drehsinn, angetrieben bzw. belastet, wobei die jeweilige Drehgeschwindigkeit der Muttern 154a, 156a um ihre Drehachse 180 betragsmäßig identisch ist.

Die Gewinde 158, 160 weisen eine identische Steigung auf.

Die rechtsgängige Mutter 154a sowie die linksgängige Mutter 156a sind mittels einer Lager- bzw. Führungs- bzw. Koppeleinrichtung 182 in Axialrichtung bzw. in der Richtung 106, in welcher die Spindel im Betrieb translatorisch bewegt wird, in ihrer Relativbeweglichkeit im Wesentlichen blockiert. Es kann allerdings ein gewisses Spiel 184, 186 in dieser Richtung gegeben sein. Die Einrichtung 182 ist insbesondere so, dass die Relativdrehbeweglichkeit der Mutter 154a gegenüber der Mutter 156a nicht blockiert wird, da diese im Betrieb im entgegengesetzten Drehsinn gedreht werden sollen. Die gegenläufig mittels des Zahnrads 174 angetriebenen Muttern 154a, 156a werden somit im Betrieb jeweils im Wesentlichen in einer Ebene bewegt. In der Darstellung gemäß Fig. 2 stehen die genannten Ebenen senkrecht auf der Bildebene. Durch die Linie 188 ist schematisch die Ebene angedeutet, in welcher die (rotatorische) Bewegungsbahn der ersten Mutter 154a liegt, und durch die Linien 190 ist schematisch die zweite Ebene angedeutet, innerhalb welcher die (rotatorische) Bewegungsbahn der zweiten Mutter 156a liegt. Diese Ebenen 188, 190 sind jeweils senkrecht zur Bewegungsrichtung 106 des Ausgangsteils 108 bzw. der Hohlspindel 108a.

Die Lager- bzw. Führungs- bzw. Koppeleinrichtung 182 kann - wie in Fig. 2 gezeigt ist - dreiteilig gestaltet sein, und weist ein erstes Teil 192, ein zweites Teil 194 sowie ein drittes Teil 196 auf. Diese Teile können über geeignete Verbindungsmittel, wie Schrauben 198, 200 oder dergleichen verbunden sein. Die Einrichtung 182 kann beispielsweise auch an einem festen Teil, wie Gehäuse oder dergleichen, fixiert sein. Ferner kann vorgesehen sein, dass die Einrichtung 182 - zumindest teilweise - mit Gehäuseabschnitten oder dem Gehäuse einstückig ausgebildet ist.

Die Spindel 108a ist als Hohlspindel gestaltet, und nimmt in ihrem Hohl- bzw. Innenraum 202 die Schaltwelle 114 auf. Die Hohlspindel 108a ist gegenüber der Schaltwelle 114 mittels geeigneter Sicherungsmittel axial gesichert. In der Gestaltung gemäß Fig. 2 sind als Sicherungsmittel Sicherungsringe 204, 206 vorgesehen. Es können allerdings auch andere Sicherungsmittel eingesetzt werden.

Die Spindel 108a ist drehbar relativ zu dieser Schaltwelle angeordnet. Es können beispielsweise auch Kanäle oder Aussparungen 208 innerhalb und/oder in der Wandung des Hohlraums 202 vorgesehen sein, die das Eindringen von Öl oder einem anderen geeigneten Schmiermittel ermöglichen. Solche Aussparungen bzw. Kanäle 208 können auch weggelassen sein.

Wenn nun mittels des Elektromotors 177 und dessen Antriebswelle 178 das Zahnrad 174 angetrieben wird, und durch den Eingriff dieses Zahnrades 174 in die Muttern 154a, 156a diese Muttern gegenläufig und mit gleicher Geschwindigkeit angetrieben werden, wird bewirkt, dass die Hohlspindel 108a im Wesentlichen transatorisch bzw. in ihrer Axialrichtung bewegt wird, also in Richtung des Doppelpfeils 106. Je nach Drehrichtung der Muttern 154a, 156a bzw. der Motorausgangswelle 178 wird die Hohlspindel 108a in der einen oder in der anderen Orientierung der Axialrichtung 106 bewegt.

Der Elektromotor 177 kann so gestaltet sein, dass er wahlweise eine Drehbewegung der Ausgangswelle 178 in beiden Orientierung erzeugen kann, so dass die Hohlspindel in beiden Orientierungen der axialen Richtung 106, bzw. hin- und herbewegt werden kann.

In der Gestaltung gemäß Fig. 2 ist es nicht erforderlich, dass integrierte Verdrehsicherungen, wie Nuten, die in Passfedem und dergleichen eingreifen, oder ähnliche Mittel an der Hohlspindel vorgesehen sind, um sicherzustellen, dass diese Hohlspindel im Wesentlichen rein axial, also in Richtung des Doppelpfeils 106, bewegt wird. Es können natürlich ergänzend solche Verdrehsicherungen vorgesehen sein.

Über die Axialsicherung 204, 206 nimmt die translatorisch bewegte Hohlspindel 108a die Schaltwelle 114 in dieser Axialrichtung 118 bzw. 106 mit. Hierdurch kann der Schaltfinger 120 - in Wählrichtung - in eine angestrebte Position gebracht werden. Das "Schalten" des Schaltfingers kann dann durch ein Verdrehen bzw. Verschwenken der Schaltwelle 114 bewirkt werden.

Um dieses Verdrehen bzw. Verschwenken zu ermöglichen, ist in der Gestaltung gemäß Fig. 2 ein zweites Stellgetriebe 112 vorgesehen.

Auf der Schaltwelle 114 ist ein Zahnrad 210 angeordnet, das in ein Zahnrad 212 eingreift.

Das Zahnrad 212 greift mit seiner Verzahnung 214 in die Verzahnung 216 des Zahnrades 210 ein, und treibt diese im Betrieb rotatorisch an. Das Zahnrad 210 ist drehfest mit der Schaltwelle 114 verbunden, so dass damit auch die Schaltwelle rotatorisch angetrieben wird, und somit der drehfest mit dieser Schaltwelle 114 verbundene Schaltfinger 120 gedreht bzw. geschwenkt werden kann. Damit kann in Gänge der Getriebeeinrichtung 100 geschaltet werden, oder solche Gänge herausgenommen werden.

Das Zahnrad 212 wird von der Antriebswelle 218 des von dem Elektromotor 177 verschiedenen zweiten Elektromotors 220 getragen. Der Elektromotor 220 treibt diese Antriebswelle 218 an. Es kann auch vorgesehen sein, dass zwischen der Antriebswelle 218 und dem Zahnrad 212 eine oder mehrere Übersetzungsstufen vorgesehen sind.

Um zu gewährleisten, dass das Zahnrad 210 auch dann noch rotatorisch von dem Zahnrad 212 angetrieben werden kann, wenn mittels des Stellgetriebes 104 die Schaltwelle axial verschoben wurde, ist gemäß Fig. 2 vorgesehen, dass das Zahnrad 212 breiter gestaltet ist als das Zahnrad 210. Dies kann auch umgekehrt gestaltet sein. Ein solcher Eingriff kann auch auf verschiedene andere Weisen sichergestellt sein. Beispielsweise kann vorgesehen sein, dass das Zahnrad 210 axial beweglich auf der Schaltwelle 114 angeordnet ist.

Es lässt sich somit mittels des Stellgetriebes 104 eine Stellbewegung für das "Wählen" erzeugen, und mittels des Stellgetriebes 112 eine Stellbewegung für das "Schalten" der Getriebeeinrichtung 100.

Das elektronische Steuergerät bzw. Getriebesteuergerät 110 steuert die Elektromotoren 177 und 220, bzw. die entsprechende Strom- bzw. Spannungsversorgung dieser Elektromotoren 177, 220. Das elektronische Steuergerät 110 kann, wie durch die gestrichelte Linie 222 schematisch angedeutet ist, mit weiteren Bauteilen oder dergleichen in Signalverbindung stehen. Beispielsweise kann eine Signalverbindung zu einem CAN-Bus. Beispielsweise können über eine Verbindung zum CAN-Bus Betriebskennwerte abgerufen werden, wie Motordrehmoment Motordrehzahl oder Fahrgeschwindigkeit oder der gleichen, die von dem elektronische Steuergerät 110 verarbeitet und / oder zu Steuerungszwecken verwendet werden.

Eine Signalverbindung kann beispielsweise zu einem in der Fahrgastzelle eines Kraftfahrzeugs angeordneten Wählhebel oder dergleichen gegeben sein.

Bei dieser Signalverbindung 222 handelt es sich vorzugsweise um eine elektrische Signalverbindung.

Wie Fig. 2 entnommen werden kann, ist das Stellgetriebe 104 Bestandteil einer Wählmechanik für das Getriebe 100.

Bei der in Fig. 2 gezeigten Gestaltung ist insbesondere vorgesehen, dass das Stellgetriebe 104 rückwärts nicht selbsthemmend ist; es aber auch rückwärts selbsthemmend sein. Das Stellgetriebe 104 kann also so sein, dass eine abtriebsseitiges (gedachtes und versuchtes) Antreiben antriebsseitig eine Bewegung auslöst, oder so, dass diese Bewegung gerade nicht bewirkt wird.

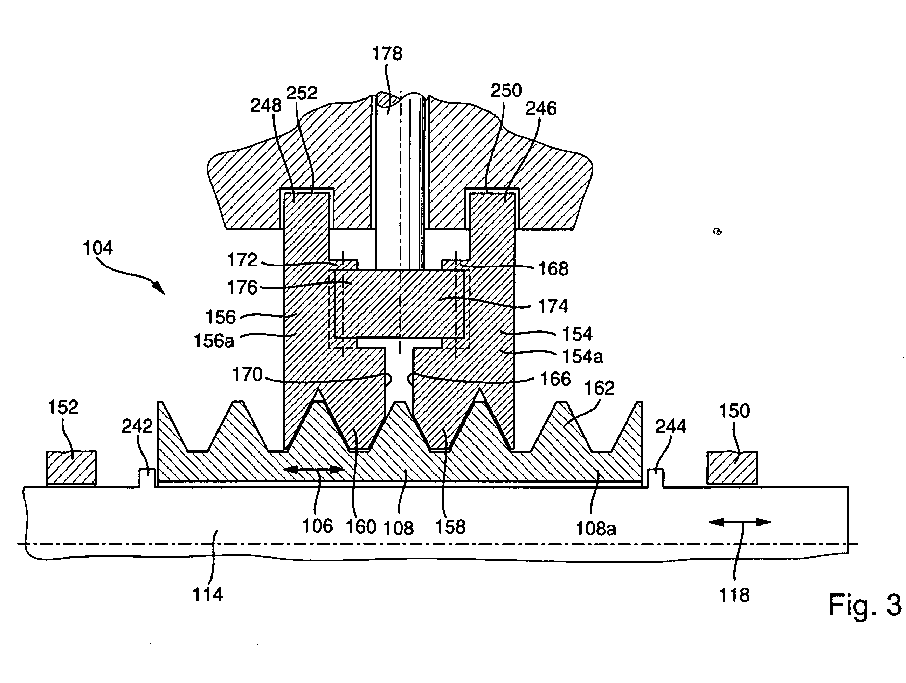

Fig. 3 zeigt ein beispielhaftes, erfindungsgemäßes Stellgetriebe 104 zur Erzeugung einer ausgangsseitigen Linear- bzw. Axialbewegung in schematischer Darstellung.

Das in Fig. 3 gezeigte Stellgetriebe 104 ist dem in Fig. 2 gezeigten ähnlich.

In Fig. 3 sind die axialen Sicherungsmittel 242, 244 schematisch dargestellt, die im Wesentlichen eine axiale Relativbeweglichkeit zwischen der Hohlspindel 108a und der Schaltwelle 114 blockieren. Hierdurch soll angedeutet werden, dass dies auch andere Elemente als die in Fig. 2 dargestellten Sicherungsringe 204, 206 sein können. Auch in der Gestaltung gemäß Fig. 3 ist die Schaltwelle 114 drehbar gegenüber der Hohlspindel 108a angeordnet.

Die rechtsgängige Mutter 154a sowie die linksgängige Mutter 156a sind in Fig. 3 in einer von der gemäß Fig. 2 abweichenden Gestaltung dargestellt. In der Gestaltung gemäß Fig. 3 weisen diese Muttern 154, 156 radial außen Flansche 246 bzw. 248 auf, die in entsprechenden Vertiefungen 250, 252 einer Lager- bzw. Führungs- bzw. Koppeleinrichtung 254 eingreifen, um eine Relativbeweglichkeit der Muttern 154a, 156a in Axialrichtung 106 bzw. in Bewegungsrichtung 106 der Spindel 108a im Wesentlichen zu blockieren. Durch diese Einrichtung 254 erstreckt sich die Motorausgangswelle 178, die gegebenenfalls hier gelagert ist. Wie bereits anhand der Fig. 2 beschrieben, greift das von der Welle 178 angetriebene Zahnrad 174 in die Verzahnungen 172 und 168, die Kronenverzahnungen sein können, der rechtsgängigen Mutter 154a bzw. der linksgängigen Mutter 156a ein, so dass diese in entgegengesetztem Drehsinn und mit gleicher Geschwindigkeit angetrieben werden, und dabei die Spindel in Axialrichtung der Spindel translatorisch in einer Orientierung dieser Axialrichtung bewegen. Durch Drehrichtungsumkehr der Welle 178 kann die Spindel 108a in der entgegengesetzten Orientierung der Axialrichtung bewegt werden.

Fig. 4 zeigt ein beispielhaftes, erfindungsgemäßes Stellgetriebe, das beispielsweise auch in der Gestaltung gemäß Fig. 2 eingesetzt werden kann.

Ein Zahnrad 174, das beispielsweise von einem Elektromotor angetrieben werden kann, und beispielsweise auf der Ausgangswelle eines solchen Elektromotors sitzt, greift mit seiner Verzahnung 176 in die Kronenradverzahnungen 168 bzw. 172 einer ersten Mutter 154a bzw. einer zweiten Mutter 156a ein. Die Verzahnungen 168, 172 sind auf jeweils der anderen Mutter 156a bzw. 154a zugewandten Stirnseiten angeordnet. Die Drehachse des Zahnrades 174 ist im Wesentlichen senkrecht zur Längsachse der Spindel 108a ausgerichtet.

Die Mutter 154a greift mit ihrem rechtsgängigen Gewinde in die Spindel 108a ein, und die Mutter 156a greift mit ihrem linksgängigen Gewinde in die Spindel 108a ein.

Das Gewinde 162 der Spindel 108a ist ein links- und rechtsgängiges Gewinde, welches so ist, dass in gleichen Bereichen der Axialrichtung dieser Spindel - in unterschiedlichen Stellungen - sowohl die rechtsgängige Mutter 154a, als auch die linksgängige Mutter 156a eingreifen kann. Dies ist in der Gestaltung gemäß
Fig. 4 so, dass das links- und rechtsgängige Gewinde der Spindel eine Art rautenförmige Struktur aufweist, wie Fig. 4 zeigt.
Fig. 5 zeigt in schematischer Ansicht eine weitere bevorzugte, erfindungsgemäße Ausführungsform eines Stellgetriebes 104 zur Erzeugung einer translatorischen Stellbewegung.

Das in Fig. 5 gezeigte Stellgetriebe 104 ist eine Art Doppelkeil-Stellgetriebe. Zwei treibende Teile 154, 156 werden ihrerseits mit einer Kraft, hier jeweils der halben Antriebskraft F_{Antrieb}/2, belastet, und zwar im Wesentlichen in Längsrichtung und entgegengesetzt, wie durch die Pfeile 270, 272 schematisch angedeutet ist. Die treibenden Teile 154, 156 sind Keile 154b, 156b, bzw. weisen keilförmige Bereiche auf.

Mittels einer Antriebseinrichtung oder dergleichen können die Keile 154b, 156b jeweils bewegt werden, und zwar jeweils im Wesentlichen translatorisch, wie durch die Pfeile 278, 280 schematisch angedeutet.

Zu dieser jeweiligen Bewegungsrichtung 278, 280, die bei den beiden Keilen 254b, 256b entgegengesetzt ist, sind die Keilflächen 274, 276 jeweils unter dem gleichen Winkel α geneigt. Die Keilflächen 274, 276 sind in der Gestaltung gemäß Fig. 5 jeweils eben. Diese Keilflächen 274, 276 greifen jeweils in eine Gegenkeilfläche 282 bzw. 284 ein, die am Ausgangsteil 108 vorgesehen sind, und im Wesentlichen entsprechend geneigt sind.

Die Keile 154b, 156b werden ferner abgestützt bzw. geführt, so dass eine vertikale Lagerkraft F_{Lager,vertikal} auf diese Keile 154b, 156b wirkt. Die Lagerkraft ist schematisch durch den Pfeil 286 dargestellt.

Im Betrieb werden die Keile 154b, 156b jeweils mit der gleichen Kraft, insbesondere der halben Antriebskraft, angetrieben, und mit der gleichen Geschwindigkeit bewegt, so dass das Ausgangsteil 108 - gegebenenfalls gegen die Kraft F_{Last}, die durch den Pfeil 288 schematisch dargestellt ist - senkrecht zur Antriebsrichtung bzw. zur Bewegungsrichtung der Keile 154b, 156b bewegt wird.

Hierbei muss nicht, wie in der Gestaltung gemäß den Fig. 1 a und 1b, eine horizontale Lagerkraft der in diesen Figuren dargestellten Art am Ausgangsteil 108 gegeben sein, um dieses translatorisch zu bewegen. Dies bedeutet natürlich nicht, dass eine solche horizontale Lagerkraft bzw. entsprechende Lagereinrichtung nicht gegeben sein kann.

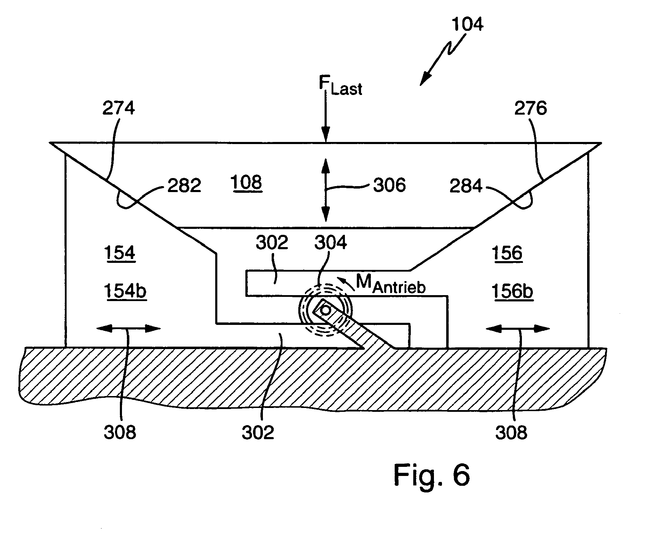

In Fig. 6 ist eine beispielhafte Gestaltung eines erfindungsgemäßen Stellgetriebes 104 in schematischer Ansicht gezeigt.

Das Stellgetriebe 104 weist Keilteile 154b, 156b auf, die gegenläufig angetrieben werden, und zwar so, dass sie im Wesentlichen linear und betragsmäßig mit der gleichen Geschwindigkeit bewegt werden.

Hierzu sind diese Keilteile 154b, 156b in der Gestaltung gemäß Fig. 6 mit einer Verzahnung 300 bzw. 302 versehen, in welche jeweils ein Zahnrad 304 eingreift, das von einer Antriebseinrichtung belastet wird. Insbesondere ist vorgesehen, dass die Steigung der Zähne bzw. Verzahnung jeweils im Wesentlichen gleich ist. Auch in der Gestaltung gemäß Fig. 6 ist die Neigung der Keilflächen 282, 284, 276, 274 jeweils im Wesentlichen gleich, und unter einem Winkel zur Bewegungsrichtung 306 des Ausgangsteils; bzw. unter einem Winkel zur Bewegungsrichtung 308 der treibenden Teile 154.

Die Bewegungsrichtung der treibenden Teile, und die Bewegungsrichtung des Ausgangsteils stehen senkrecht aufeinander. Das Ausgangsteil wird im Wesentlichen translatorisch bzw. in Axialrichtung bewegt. Es kann beispielsweise mit einer Schaltwelle gekoppelt sein.

In den Fig. 2 bis 6 sind entsprechende Bauteile mit den gleichen Bezugszeichen versehen.

Bezugszeichen
- 10: Stellgetriebe
- 12: treibendes Teil
- 14: Ausgangsteil
- 16: Pfeil (Antriebskraft F_{Antrieb})
- 18: Pfeil (Weg s)
- 20: Pfeil (Weg h)
- 22: Pfeil (F_{Last})
- 24: Verzahnung
- 26: Zahnrad
- 28: Lager- bzw. Führungselement
- 30: Pfeil (F_{Lager,vertikal})
- 32: Keilfläche von 12
- 34: Keilfläche von 14
- 36: Pfeil (F_{Lager,horizontal})
- 38: Lager- bzw. Führungselement
- 100: Kraftfahrzeuggetriebe
- 102: Betätigungseinrichtung
- 104: Stellgetriebe
- 106: Doppelpfeil
- 108: Ausgangsteil
- 108a: Hohlspindel
- 110: elektronisches (Getrie- be)Steuergerät
- 112: (zweites) Stellgetriebe zur Er- zeugung einer rotatorischen Stellbewegung
- 114: Schaltwelle
- 116: Doppelpfeil
- 118: Doppelpfeil
- 120: Schaltfinger
- 122: mechanischer Übertragungs- mechanismus
- 124: Gangstufe
- 126: Zahnrad
- 128: Zahnrad
- 130: Welle
- 132: Welle
- 134: Schiebemuffe
- 136: Schaltgabel
- 138: Schaltgabel
- 140: Schaltgabel
- 142: Blackbox
- 144: Schaltmaul in 140
- 146: Schaltmaul in 138
- 148: Schaltmaul in 136
- 150: Lagermittel
- 152: Lagermittel
- 154: erstes treibendes Teil
- 154a: erste Mutter (mit Rechtsgewin- de)
- 156: zweites treibendes Teil
- 156a: zweite Mutter (mit Linksgewin- de)
- 158: Rechtsgewinde
- 160: Linksgewinde
- 162: Gewinde von 108a
- 164: Axialposition von 108a
- 166: Stirnseite von 154a
- 168: Kronenradverzahnung von 154a
- 170: Stirnseite von 156a
- 172: Kronenradzahnung von 156a
- 174: Zahnrad
- 176: Verzahnung
- 177: Elektromotor
- 178: Motorausgangswelle
- 180: Drehachse
- 182: Lager- bzw. Führungs- bzw. Koppeleinrichtung
- 184: Spiel
- 186: Spiel
- 188: erste Ebene
- 190: zweite Ebene
- 192: erstes Teil von 182
- 194: zweites Teil von 182
- 196: drittes Teil von 182
- 198: Schraube
- 200: Schraube
- 202: Hohlraum von 108a
- 204: Sicherungsring
- 206: Sicherungsring
- 208: Aussparung
- 210: Zahnrad
- 212: Zahnrad
- 214: Verzahnung von 212
- 216: Verzahnung von 210
- 218: Antriebswelle von 220
- 220: Elektromotor
- 222: gestrichelte Linie

- 242: axiales Sicherungsmittel
- 244: axiales Sicherungsmittel
- 246: Flansch
- 248: Flansch
- 250: Vertiefung
- 252: Vertiefung
- 254: Lager- bzw. Führungs- bzw. Koppeleinrichtung
- 270: Pfeil
- 272: Pfeil
- 274: Keilfläche
- 276: Keilfläche
- 278: Pfeil (Bewegungsbahn)
- 280: Pfeil (Bewegungsbahn)
- 282: Gegenkeilfläche
- 284: Gegenkeilfläche
- 286: Pfeil
- 288: Pfeil
- 300: Verzahnung
- 302: Verzahnung
- 304: Zahnrad
- 306: Bewegungsrichtung
- 308: Bewegungsrichtung

## Patentansprüche

1. Stellgetriebe (104) zur Erzeugung einer translatorischen Stellbewegung mit einem getriebenen rein translatorisch bewegten Ausgangsteil (108) und zwei dieses Ausgangsteil (108) im Betrieb treibendenden Teilen (154 bzw. 156), die jeweils beweglich angeordnet sind und jeweils das Ausgangsteil (108) kontaktieren bzw. belasten bzw. in dieses Ausgangsteil (108) eingreifen, wobei das erste treibende Teil (154) im Betrieb des Stellgetriebes (104) innerhalb einer ersten Ebene (188) bewegt wird und wobei das zweite treibende Teil (156) im Betrieb des Stellgetriebes (104) innerhalb einer zweiten Ebene (190) bewegt wird,
**dadurch gekennzeichnet, dass** das erste treibende Teil (154) und das zweite treibende Teil (156) ihrerseits im Betrieb des Stellgetriebes (104) mittels genau einer Antriebseinrichtung (177) von der Antriebsseite gegenläufig angetrieben werden, und dass ferner das translatorisch bewegte Ausgangsteil (108) bei einer gegenläufigen Bewegung der treibenden Teile (154 bzw. 156) senkrecht zu diesen beiden Ebenen (188, 190) bewegt wird.

2. Stellgetriebe nach Anspruch 1, wobei das Ausgangsteil (108, 108a) eine Spindel (108a) ist und das erste treibende Teil (154) eine rechtsgängige Mutter (154a) und das zweite treibende Teil (156) eine linksgängige Mutter (156a) ist.

3. Stellgetriebe nach Anspruch 2, **dadurch gekennzeichnet, dass** die Spindel (108a) mit zumindest einem Gewindeabschnitt zur Aufnahme der rechtsgängigen Mutter (154a) versehen ist und mit einem zumindest einem Gewindeabschnitt zur Aufnahme der linksgängigen Mutter (156a) und wobei diese Muttern (154a, 156a) mit ihren jeweiligen Gewinden (158, 160) in diesen jeweiligen Gewindeabschnitt der Spindel (108a) eingreifen.

4. Stellgetriebe nach einem der Ansprüche 2 und 3, **dadurch gekennzeichnet, dass** das die Spindel (108a) eine rechts- und linksgängige Spindel (108a) ist, bei der in identischen axialen Abschnitten sowohl die rechtsgängige Mutter (154a) als auch die linksgängige Mutter (156a) eingreifen kann.

5. Stellgetriebe nach einem der Ansprüche 2 bis 4, **dadurch gekennzeichnet, dass** das Linksgewinde der Spindel (108a) und das Rechtsgewinde der Spindel (108a) und / oder das Linksgewinde (160) der linksgängigen (156a) Mutter und das Rechtsgewinde (158) der rechtsgängigen Mutter(154) die gleiche Steigung aufweisen.

6. Stellgetriebe nach einem der Ansprüche 2 bis 5, **dadurch gekennzeichnet, dass** die erste Mutter (154a) sowie die zweite Mutter (156a) jeweils mit einer Kronenradverzahnung als Verzahnung (168, 172) versehen sind, über welche diese Muttern im Betrieb jeweils angetrieben bzw. in Bewegung versetzt werden.

7. Stellgetriebe nach Anspruch 6, **dadurch gekennzeichnet, dass** ein Zahnrad (174) vorgesehen ist, dessen Verzahnung (176) antriebsseitig in die Verzahnung (168) der ersten Mutter (154a) und in die Verzahnung (172) der zweiten Mutter (156a) eingreift.

8. Stellgetriebe nach einem der vorangehenden Ansprüche 2 bis 7, **dadurch gekennzeichnet, dass** eine Lager- und / oder Führungseinrichtung und / oder Koppeleinrichtung (182) vorgesehen ist, die eine Relativbeweglichkeit zwischen der ersten und der zweiten Mutter (156a) in zumindest einer Orientierung der Richtung blockiert, in welcher die Spindel (108a) im Betrieb translatorisch bewegt wird.

9. Stellgetriebe nach Anspruch 1, wobei das erste und das zweite treibende Teil (156) jeweils eine zur Bewegungsrichtung des betreffenden Teils (156) geneigte Fläche (274, 267) aufweist, die jeweils eine entsprechend geneigte Fläche (282, 284) des Ausgangsteils (108) zur Kraftübertragung im Betrieb kontaktiert, so dass das Ausgangsteil angetrieben und im Wesentlichen translatorisch bewegt wird.

10. Stellgetriebe nach Anspruch 9, **dadurch gekennzeichnet, dass** das erste (154) und das zweite treibende Teil (156) so gelagert bzw. geführt sind, dass diese Teile (154 bzw. 156) im Betrieb jeweils translatorisch bewegt werden.

11. Stellgetriebe nach einem der vorangehenden Ansprüche, **dadurch gekennzeichnet, dass** die Antriebseinrichtung (177 mittels welcher das erste treibende Teil (154) sowie das zweite treibende Teil (156) im Betrieb angetrieben wird, einen Elektromotor (177) aufweist, der von einem elektronischen Steuergerät (110) angesteuert wird.

12. Stellgetriebe nach einem der vorangehenden Ansprüche, **dadurch gekennzeichnet, dass** das erste (154) und das zweite treibende Teil (156) im Betrieb das Ausgangsteil (108, 108a) so belasten, dass die vektoriell resultierende Kraft aus der vektroriellen Kraft, die vom ersten treibenden Teil (154) auf das Ausgangsteil (108, 108a) übertragen wird, und der vektoriellen Kraft, die vom zweiten treibenden Teil (156) auf das Ausgangsteil (108) übertragen wird in Achsrichtung des Ausgangsteils (108, 108a) gelegen ist.

13. Stellgetriebe nach einem der vorangehenden Ansprüche, **dadurch gekennzeichnet, dass** das erste (154) und das zweite treibende Teil (156) im Betrieb mit der gleichen Geschwindigkeit bewegt werden.

14. Stellgetriebe nach einem der vorangehenden Ansprüche, **dadurch gekennzeichnet, dass** wenigstens eine vom Ausgangsteil (108) verschiedene Lager- und / oder Führungseinrichtung (182) vorgesehen ist, mittels welcher die treibenden Teile (154, 156) geführt und / oder gelagert werden

15. Stellgetriebe nach einem der vorangehenden Ansprüche 2 bis 8, **dadurch gekennzeichnet, dass** die als Ausgangsteil (108, 108a) vorgesehene Spindel (108a) als Hohlspindel (108a) ausgestaltet ist, wobei innerhalb dieser Hohlspindel (108a) eine relativ zur Hohlspindel (108a) um ihre Längsachse dreh- bzw. schwenkbare Schaltwelle (114) angeordnet ist, die gegenüber der Hohlspindel (108a) axial gesichert ist.

## Claims

1. Actuating gear mechanism (104) for generating a translatory actuating movement having a driven purely translatorily moved output part (108) and two parts (154 and 156) which drive the said output part (108) during operation, are in each case arranged movably and in each case make contact with or load the output part (108) or engage into the said output part (108), the first driving part (154) being moved within a first plane (188) during the operation of the actuating gear mechanism (104), and the second driving part (156) being moved within a second plane (190) during the operation of the actuating gear mechanism (104), **characterized in that** the first driving part (154) and the second driving part (156) for their part are driven in opposite directions from the drive side by means of precisely one drive device (177) during the operation of the actuating gear mechanism (104), and **in that**, furthermore, in the case of a movement in opposite directions of the driving parts (154 and 156), the translatorily moved output part (108) is moved perpendicularly with respect to the said two planes (188, 190).

2. Actuating gear mechanism according to Claim 1, the output part (108, 108a) being a spindle (108a), and the first driving part (154) being a right-handed nut (154a) and the second driving part (156) being a left-handed nut (156a).

3. Actuating gear mechanism according to Claim 2, **characterized in that** the spindle (108a) is provided with at least one threaded section for receiving the right-handed nut (154a) and is provided with at least one threaded section for receiving the left-handed nut (156a), and the said nuts (154a, 156a) engaging with their respective threads (158, 160) into this respective threaded section of the spindle (108a).

4. Actuating gear mechanism according to either of Claims 2 and 3, **characterized in that** the spindle (108a) is a right-handed and left-handed spindle (108a), in which both the right-handed nut (154a) and the left-handed nut (156a) can engage in identical axial sections.

5. Actuating gear mechanism according to one of Claims 2 to 4, **characterized in that** the left-handed thread of the spindle (108a) and the right-handed thread of the spindle (108a) and/or the left-handed thread (160) of the left-handed nut (156a) and the right-handed thread (158) of the right-handed nut (154) have the same lead.

6. Actuating gear mechanism according to one of Claims 2 to 5, **characterized in that** the first nut (154a) and the second nut (156a) are provided in each case with a crown-gear toothing system as toothing system (168, 172), via which the said nuts are in each case driven or set in motion during operation.

7. Actuating gear mechanism according to Claim 6, **characterized in that** a gearwheel (174) is provided, the toothing system (176) of which engages on the drive side into the toothing system (168) of the first nut (154a) and into the toothing system (172) of the second nut (156a).

8. Actuating gear mechanism according to one of preceding Claims 2 to 7, **characterized in that** a bearing and/or guide device and/or coupling device (182) is provided which blocks relative movability between the first and the second nuts (156a) in at least one orientation of the direction, in which the spindle (108a) is moved translatorily during operation.

9. Actuating gear mechanism according to Claim 1, the first and the second driving parts (156) in each case having a face (274, 267) which is inclined with respect to the movement direction of the relevant part (156) and in each case makes contact during operation with a correspondingly inclined face (282, 284) of the output part (108) for force transmission, with the result that the output part is driven and is moved substantially translatorily.

10. Actuating gear mechanism according to Claim 9, **characterized in that** the first (154) and the second driving parts (156) are mounted or guided in such a way that the said parts (154 and 156) are in each case moved translatorily during operation.

11. Actuating gear mechanism according to one of the preceding claims, **characterized in that** the drive device (177), by means of which the first driving part (154) and the second driving part (156) are driven during operation, has an electric motor (177) which is actuated by an electronic control unit (110).

12. Actuating gear mechanism according to one of the preceding claims, **characterized in that** the first (154) and the second driving parts (156) load the output part (108, 108a) during operation in such a way that the vectorially resulting force from the vectorial force, which is transmitted from the first driving part (154) to the output part (108, 108a), and the vectorial force, which is transmitted from the second driving part (156) to the output part (108), is located in the axial direction of the output part (108, 108a).

13. Actuating gear mechanism according to one of the preceding claims, **characterized in that** the first (154) and the second driving parts (156) are moved at the same speed during operation.

14. Actuating gear mechanism according to one of the preceding claims, **characterized in that** at least one bearing and/or guide device (182) is provided which is different from the output part (108) and by means of which the driving parts (154, 156) are guided and/or mounted.

15. Actuating gear mechanism according to one of preceding Claims 2 to 8, **characterized in that** the spindle (108a) which is provided as output part (108, 108a) is designed as a hollow spindle (108a), a switching shaft (114) which can be rotated and/or pivoted about its longitudinal axis relative to the hollow spindle (108a) and is secured axially with respect to the hollow spindle (108a) being arranged within the said hollow spindle (108a).

## Revendications

1. Mécanisme de positionnement (104) destiné à générer un mouvement de positionnement translatoire comprenant une pièce de sortie (108) entraînée dans un mouvement purement translatoire et deux pièces (154 ou 156) qui entraînent cette pièce de sortie (108) pendant le fonctionnement, lesquelles sont respectivement disposées avec mobilité et entrent respectivement en contact avec la pièce de sortie (108) ou la sollicitent ou encore viennent en prise dans cette pièce de sortie (108), la première pièce entraînante (154) étant déplacée à l'intérieur d'un premier plan (188) pendant le fonctionnement du mécanisme de positionnement (104) et la deuxième pièce entraînante (156) étant déplacée à l'intérieur d'un deuxième plan (190) pendant le fonctionnement du mécanisme de positionnement (104), **caractérisé en ce que** la première pièce entraînante (154) et la deuxième pièce entraînante (156) de leur côté sont entraînées en sens inverse depuis le côté d'entraînement au moyen d'exactement un dispositif d'entraînement (177) pendant le fonctionnement du mécanisme de positionnement (104), et **en ce que** la pièce de sortie (108) qui est déplacée de manière translatoire, lors d'un mouvement en sens inverse des pièces entraînantes (154 ou 156), est en outre déplacée perpendiculairement à ces deux plans (188, 190).

2. Mécanisme de positionnement selon la revendication 1, la pièce de sortie (108, 108a) étant une broche (108a) et la première pièce entraînante (154) étant un écrou tournant à droite (154a) et la deuxième pièce entraînante (156) étant un écrou tournant à gauche (156a).

3. Mécanisme de positionnement selon la revendication 2, **caractérisé en ce que** la broche (108a) est munie d'au moins une portion filetée pour accueillir l'écrou tournant à droite (154a) et d'au moins une portion filetée pour accueillir l'écrou tournant à gauche (156a) et ces écrous (154a, 156a) venant en prise avec leurs filets respectifs (158, 160) dans cette portion filetée respective de la broche (108a).

4. Mécanisme de positionnement selon l'une des revendications 2 et 3, **caractérisé en ce que** la broche (108a) est une broche (108a) tournant vers la droite et la gauche avec laquelle l'écrou tournant à droite (154a) ainsi que l'écrou tournant à gauche (156a) peuvent venir en prise dans des portions axiales identiques.

5. Mécanisme de positionnement selon l'une des revendications 2 à 4, **caractérisé en ce que** le filet à gauche de la broche (108a) et le filet à droite de la broche (108a) et/ou le filet à gauche (160) de l'écrou tournant à gauche (156a) et le filet à droite (158) de l'écrou tournant à droite (154) présentent le même pas.

6. Mécanisme de positionnement selon l'une des revendications 2 à 5, **caractérisé en ce que** le premier écrou (154a) ainsi que le deuxième écrou (156a) sont respectivement munis d'une denture de couronne en tant que denture (168, 172), par le biais de laquelle ces écrous, lors du fonctionnement, sont respectivement entraînés ou mis en mouvement.

7. Mécanisme de positionnement selon la revendication 6, **caractérisé en ce qu'**il est prévu une roue dentée (174) dont la denture (176) vient en prise du côté de l'entraînement dans la denture (168) du premier écrou (154a) et dans la denture (172) du deuxième écrou (156a).

8. Mécanisme de positionnement selon l'une des revendications 2 à 7, **caractérisé en ce qu'**il est prévu un dispositif à palier et/ou de guidage et/ou un dispositif d'accouplement (182) qui bloque une mobilité relative entre le premier et le deuxième écrou (156a) dans au moins une orientation de la direction dans laquelle la broche (108a), en fonctionnement, est déplacée de manière translatoire.

9. Mécanisme de positionnement selon la revendication 1, dans lequel la première et la deuxième pièce entraînante (156) présentent respectivement une surface inclinée (274, 267) vers le sens de déplacement de la pièce (156) concernée, laquelle entre à chaque fois en contact avec une surface inclinée (282, 284) en conséquence de la pièce de sortie (108) en vue de la transmission de force en fonctionnement, de sorte que la pièce de sortie est entraînée et déplacée pour l'essentiel de manière translatoire.

10. Mécanisme de positionnement selon la revendication 9, **caractérisé en ce que** la première (154) et la deuxième pièce (156) entraînante sont logées ou guidées de telle sorte que ces pièces (154 ou 156) sont respectivement déplacées de manière translatoire en fonctionnement.

11. Mécanisme de positionnement selon l'une des revendications précédentes, **caractérisé en ce que** le dispositif d'entraînement (177) au moyen duquel la première pièce entraînante (154) ainsi que la deuxième pièce entraînante (156) sont entraînées en fonctionnement présente un moteur électrique (177) qui est commandé par un contrôleur électronique (110).

12. Mécanisme de positionnement selon l'une des revendications précédentes, **caractérisé en ce que** la première (154) et la deuxième pièce (156) entraînante, en fonctionnement, sollicitent la pièce de sortie (108, 108a) de telle sorte que la force résultant vectoriellement de la force vectorielle qui est transmise par la première pièce entraînante (154) à la pièce de sortie (108, 108a) ainsi que de la force vectorielle qui est transmise par la deuxième pièce entraînante (156) à la pièce de sortie (108) se trouve dans la direction de l'axe de la pièce de sortie (108, 108a).

13. Mécanisme de positionnement selon l'une des revendications précédentes, **caractérisé en ce que** la première (154) et la deuxième pièce (156) entraînante sont déplacées à la même vitesse en fonctionnement.

14. Mécanisme de positionnement selon l'une des revendications précédentes, **caractérisé en ce qu'**il est prévu au moins un dispositif à palier et/ou de guidage (182) différent de la pièce de sortie (108), au moyen duquel les pièces entraînantes (154, 156) sont guidées et/ou supportées.

15. Mécanisme de positionnement selon l'une des revendications 2 à 8 précédentes, **caractérisé en ce que** la broche (108a) prévue comme pièce de sortie (108, 108a) est réalisée sous la forme d'une broche creuse (108a), un arbre de commutation (114) rotatif ou pivotant autour de son axe longitudinal par rapport à la broche creuse (108a) et qui est bloqué dans le sens axial par rapport à la broche creuse (108a) étant disposé à l'intérieur de cette broche creuse (108a).
